# EUROPEAN PATENT APPLICATION

(11) **EP 4 768 128 A1**
(43) Date of publication of application: **01.07.2026**
(21) Application number: 25184531.9
(22) Date of filing: 23.06.2025
(51) Int. Cl.: B03D 1/00, D01G 11/00

(54) **FLOTATION SHORT FIBER LENGTH**

(71) Applicant: Lenzing Aktiengesellschaft, 4860 Lenzing (AT); Södra Skogsägarna Ekonomiska Förening, 351 89 Växjö (SE)
(72) Inventor: Shagaev, Oleg, 4860 Lenzing (AT); Scherzer, Dan, 4860 Lenzing (AT); Herchl, Richard, 4860 Lenzing (AT); Thaler, Michael, 4860 Lenzing (AT); Schlader, Sandra, 4860 Lenzing (AT); Burgstaller, Christian, 4860 Lenzing (AT); Claesson, Helena, 351 89 Växjö (SE); Ribe, Espen, 351 89 Växjö (SE)
(74) Representative: Schwarz & Partner Patentanwälte GmbH

(57) **Abstract**

Method for processing textile waste for recycling comprising the steps of:
a) providing textile waste, which comprises cellulosic fibers and non-cellulosic fibers and contaminants, as raw material,
b) at least one step of comminution of the raw material in at least one comminutor to produce a comminuted material,
c) submitting the comminuted material to flotation to remove non-cellulosic fibers and contaminants from cellulosic fibers, and
d) providing the purified cellulosic fibers to further processing steps,
wherein, within the comminution step or steps and before the flotation, an average fiber length of the cellulosic and non-cellulosic fibers is reduced to an average fiber length of 0.7 to 2 mm, preferably to an average fiber length of 0.9 to 1.2 mm.

## Description

The present invention relates to a method for processing textile waste which comprises cellulosic fibers and non-cellulosic fibers and contaminants for recycling.

### BACKGROUND OF THE INVENTION

Global fabric production has risen steadily in recent decades, resulting in an annual volume of more than 100 million tons of fabrics. With such a quantity of fabrics, there is also a lot of post-consumer waste, but less than 1% of the global fiber market came from pre- and post-consumer recycled textiles. As a result, the fabric industry is facing enormous challenges in terms of sustainability, resource efficiency and the need for effective recycling solutions. Accordingly, there is a gaining interest in various commercial and industrial applications in fabric recycling to address this problem.

Current recycling strategies differentiate between mechanical and chemical recycling, with each recycling mechanism offering different advantages and disadvantages. As a result, different industries employ different recycling mechanisms depending on the raw material and the desired recycled product. Mechanical recycling, for example, is an important recycling process for natural fibers such as cotton, wool, linen and silk. Within such a mechanical recycling process, special machinery separate fabrics into long singular fibers, which are used directly to produce the yarn. Yet, such yarns are often of lower quality and are therefore less suitable to produce new high-quality fabrics.

In contrast to mechanical recycling, the chemical recycling focusses on the separation of cellulose containing textiles, which is currently under intensive development. These chemical processes are mainly targeted at separating natural fibers from synthetic fibers by dissolving the natural fibers for producing bioproducts or recovery of the synthetic polymers textiles component, or dissolving synthetic textiles components and recovering natural fibers.

In principle, the separation and purification of cotton fibers from different synthetic fibers and other impurities present in recycled textiles is challenging. Both procedures, separation and purification, require the application of different processes, equipment and techniques based on morphological and surface differences between cotton fibers and synthetic fibers, e.g. fiber length, thickness, stiffness, specific surface, wettability and so on.

A method and device for the separation of mixed fibers by using the triboelectric effect is disclosed in WO 2022/156775 A1. This method includes different steps, starting with extraction of single fibers from the mixed fibers, wherein the mixed fibers are consisting of protein-based fibers, cellulose-based fibers and/or synthetic fibers. This is followed by the usage of an air flow to carry the single fibers to a triboelectric device, which charges the single fibers. Afterwards another air flow is used to carry the charged fibers to a separation device, which separates the positively charged fibers from the negatively charged fibers. The separated fibres are then transported again via an air flow to a collecting device, which collects the charged fibers with different polarities.

Another method for separation of fibers is disclosed in document WO 2020/127453 A1, which provides a method for separation of fibers. This method comprises the steps of providing a mixture of cellulose and non-cellulose fibers, reducing the cellulose chain length, subjecting the mixture of fibers to mechanical treatment to break agglomerates of fibers, adjusting the concentration of fibers in the mixture and subjecting the mixture to flotation to remove the non-cellulose fibers.

Furthermore, WO 2020/245056 A1 discloses a process for preparing a broken-up, cellulose-containing, starting material with predefined fiber-length distribution. This process consists of the steps of supplying a cellulose-comprising starting material and the treating of the cellulose-comprising starting material in such a way that the cellulose fibers of the cellulose containing starting material comprise a predetermined fiber length distribution. The treatment of the cellulose-containing starting material comprises the following steps, which are listed in the sequence they are carried out. The treatment comprises rough mechanical comminution, alkaline treatment at high temperature, singularizing fibers, separating steps (chemical separating or mechanical separating comprises separation such as flotation), shortening of the singularized fibers to a predetermined fiber length, cleaning and further steps. The shortening to a predetermined fiber length ensures that clogging and entangling of fibers in subsequent processes are avoided. Consequently, despite the coarse fiber shortening, the step of purification of the cellulose fibers is still inefficient.

### SHORT DESCRIPTION OF THE INVENTION

In view of the above description of the background of the invention, the objective task of the invention is to provide a method of purification cotton fibers from non-cellulosic fibers with increased efficiency in the processing of the recycled textiles pulp.

A solution is provided by a method for processing textile waste for recycling comprising the steps of:
a) providing textile waste, which comprises cellulosic fibers and non-cellulosic fibers and contaminants, as raw material,
b) at least one step of comminution of the raw material in at least one comminutor to produce a comminuted material,
c) submitting the comminuted material to flotation to remove non-cellulosic fibers and contaminants from cellulosic fibers, and
d) providing the purified cellulosic fibers to further processing steps,
wherein, within the comminution step or steps and before the flotation, an average fiber length of the cellulosic and non-cellulosic fibers is reduced to an average fiber length of 0.7 to 2 mm, preferably to an average fiber length of 0.9 to 1.2 mm.

Longer fibers tend to entangle together during the flotation process. The entangling is resulting in a network of entangled fibers, which make the removal of non-cellulosic fibers and impurities more difficult. This phenomenon of network formation from fibers does not occur with short fiber lengths in step (b). Therefore, the formation of such networks is prevented by the reduction of the fiber length. In addition, fiber length reduction simplifies the separation of natural fibres from non-cellulosic fibres and components. Subsequently, the efficiency of the whole process, especially of the flotation stage is increased. Additionally, during comminution process, it is crucial to ensure that the fibers are not too short. If the fibers are too short, the cellulose can dissolve, which should be avoided, or they can be erroneously rejected during flotation, which can lead to material loss and environmental pollution.

In the first step a) of the process, the raw material, which may consist of collected and pre-sorted textile waste or used textiles, is provided. The textile waste comprises cellulosic fibers, non-cellulosic fibers and non-cellulosic contaminants. Moreover, the textile waste can originate from used clothes, home textiles, recycled textiles, recycled textile fibers, textile trimmings from textile production or similar, for example. Non-cellulosic fibers, particularly synthetic fibers, can comprise polyethylene terephthalate (PET), which has a major role in the fabric industry, both as new and as recycled material. The non-cellulosic can also comprise other well-known synthetic components from the textile industry, such as polyamides (PA), elastane, polypropene (PP), polyacrylonitrile (PAN), polyethylene (PE), polyethylene terephthalate (PET) and polyurethane (PU). In contrast, non-cellulosic contaminants can comprise zippers, metal and non-metal buttons, fasteners, seams, prints and different synthetics, which are well-known in the textile production. The textile waste may be a pre- and/or post-consumer textile waste. A post-consumer textile waste may comprise one or multiples of the follows: worn garments such as shirts, jeans, skirts, dresses, gowns, suits, overalls, trousers, pants, underwear, sweaters, pullovers, etc.; used home-textiles such as bed linen, towels, curtains, cloths, tablecloths, seat covers, drapery, upholstery fabrics or the like; nonwoven articles such as wipes, diapers, filters or similar. Pre-consumer textile waste may comprise trimmings or scraps from the production of garments, home-textiles, nonwovens, etc., or production waste from the manufacturing of yarns, textiles or regenerated cellulosic fibers.

This is followed by at least one step of comminution of the raw material in at least one comminutor to produce a comminuted material. Within this comminution step or steps the size or fiber length of the provided raw material is reduced to a desired average fiber length, wherein the term "fiber length" refers to the length of cellulosic and non-cellulosic fibers. The fiber length is reduced to a desired average fiber length of 0.7 to 2 mm, preferably to an average fiber length of 0.9 to 1.2 mm. This average fiber length should contain as few longest fibers as possible. Furthermore, the disintegrating step or steps can be carried out using any conventional technique known in the prior art. Conventional known comminution techniques for example include shredding, fiberizing, milling, cutting, chopping, deflaking and refining. The comminutor can be selected from the group of a shredder, guillotine, cutting mill, cutting knives, a fiberizier, a mill, a deflaker and/or a refiner. In addition to the at least one (first) comminutor, a second comminutor, prefereably selected from the group a shredder, guillotine, cutting mill, cutting knives, a fiberizier, a mill, a deflaker and/or a refiner can also be used to perform the comminution step or steps. The second comminutor may be different from the first comminutor.

Afterwards the comminuted material is submitted to flotation. This flotation step removes non-cellulosic fibers and contaminants from cellulosic fibers, wherein the removal of non-cellulosic fibers and contaminants is favoured by an average fiber length with as few longest fibers as possible.

Through the flotation process, purified cellulose fibers are obtained, which are provided to further processing steps. The further processing steps can comprise shipment to other facility, cooking, hydrocycloning, drying and/or bleaching.

In one embodiment at least one of the comminution step or steps is carried out under dry conditions. For the purposes of the present invention, "dry" or "dry condition" is primarily defined as having a consistency of over 90%. The term "consistency", as it is used herein refers to the contents of solids in a suspension. The consistency is usually given as a weigth percentage (% w/w). By performing the comminution step or steps in dry conditions, non-cellulosic contaminants such as buttons, seams and prints are at least partially removed. This results in the reduction of contamination of cellulosic fibers in subsequent aqueous processes. Such contamination negatively affects later lyocell and viscose production processes. Additionally, comminution in dry condition allows narrower and more efficient fiber length distribution of the average fiber length.

In another embodiment at least one of the comminution step or steps is carried out under wet conditions. This prevents the formation of fiber flocks and fines during the disintegrating step or steps and the wet comminuted material can be more easily integrated into subsequent processes, as it has already been pretreated to a certain extent.

The comminution step or steps can comprise shredding, fiberizing, milling, cutting, chopping, deflaking and/or refining. For example, the process of disintegrating can be divided into one step of shredding and one step of fiberizing. This prevents non-cellulosic fibers from melting and thus the formation of agglomerations consisting of cellulosic fibers embedded in non-cellulosic fibers.

In an embodiment, the recycled fabric is composed of 50 to 99.9% w/w cellulosic fibers and 0,1 to 50% w/w non-cellulosic fiber. Accordingly, as an example, the recycled fabric can be composed of 96% cotton and 4% elastane, or 90% cotton and 10% nylon, or 70% cotton and 30% PET.

Surprisingly, it turned out that the purified cellulosic fibers can possess a limiting viscosity number above 950 ml/g, preferably above 1000 ml/g, more preferably above 1100 ml/g. This is higher than the interval of 200 to 900ml/g for the viscosity number, which is recommended by WO 2020/127453 A1. Despite this high viscosity number, the removal efficiency of non-cellulosic fibers and contaminants was increased due to the reduced fiber length. Therefore, it can be concluded that reducing the viscosity of the cotton fibres before the flotation stage to a level of 200-900 ml/g is not necessary, as the cotton viscosity has no influence on the flotation efficiency for removing impurities. It is often favourable to produce a purified cellulose that has a rather high limiting viscosity number, as this makes it easier to adjust the overall viscosity if the purified cellulose fibers are blended with other cellulosic raw materials, such as wood pulp or recycling pulp from other sources.

Preferably a flotation device is used for the flotation process. Within this device the separation of non-cellulosic contaminants from cellulosic fibers is very effective due to the short fiber length that prevents formation of the fibrous network in the wet part of the froth.

In a preferred embodiment the flotation process is carried out in water phase. By avoiding any solvents or other cooking liquors, the excessive formation of the foam during flotation is prevented.

In another embodiment at least one surfactant is added to the pulp before the flotation step. Any surface-active agent can be considered as a surfactant. Surfactants with polar and non-polar groups can be used for flotation.

The temperature during the flotation process can be between 20°C and 90°C. The temperature of 60°C is preferred for the flotation process.

In one embodiment the flotation time during the flotation process between 3 and 20 minutes and can be performed in one or multiple stages. In a special embodiment the flotation time during the flotations process is 12 minutes.

The purified fibers or mixture can be used as a raw material in a viscose or lyocell manufacturing process.

The further processing steps can comprise shipment to other facility, cooking, hydrocycloning, drying and/or bleaching.

### DETAILED DESCRIPTION OF THE INVENTION

The foregoing and other objects, features and advantages of the invention will become more apparent from the following detailed description, which proceeds with reference to the accompanying examples.

### Example 1 - Analysis of the influence of fiber length

A comparison test between two fabric samples with different fiber length was carried out. For both samples, a pulp sheet from recycled fabrics, which consist of cellulosic and non-cellulosic fibers, was used, wherein the pulp sheet was taken out of the drying machine of a commercial textiles recycling mill.

For the first sample, the pulp sheet was dispersed in water by using a pulper and then submitted to the deflaker to remove fiber flocks without reducing the fiber length. Measured with the fiber analyser, the average fiber length of this pulp was 2.8 mm.

The second sample was dry milled with a special grinding machine to reduce the fiber length. After the milling, the steps of dispersion in the pulper and submitting to the deflaker followed, which is analogous to the processing of the first sample. The average fiber length of this milled pulp, which was also measured with the fiber analyser, was 0.7 mm.

Both pulp samples were subjected to the flotation process in water with a consistency of 1.0%. The following description of the flotation process is provided separately for each sample. The used flotation unit comprises 30 litres and 210g sample pulp were added to the unit based on the dry weight of the pulp. The diluted surfactant BASF Pluronic PE 10500 with the active substance content of 17%, with a proportion of 3% of the pulp, is then added to the flotation, wherein the surfactant generated a froth. At a water temperature of 20°C and an air flow of 6.3 1/min through the single flotation unit, the flotation time was 12 min. The flotation rejects at the top of the froth were collected via specially designed rotating skimming blades and evacuated via a funnel.

The following table shows in the first line the measured cellulose fiber and foreign fiber content of the feed pulp before flotation (identical for both samples) and in the second and third line the measured cellulose fiber and foreign fiber content of the fiber samples after flotation and the total amount of rejects by weight that were removed from the two samples in flotation:

| **Samples** | **Cellulose content** | **Foreign Content** | **Total amount of rejects by weight** |
|---|---|---|---|
| Feed pulp to flotation | 98.9% | 1.1% | |
| Accepts from original pulp (2.8 mm fiber length sample) | 98.7% | 1.3% | 1.9 g |
| Ground pulp accepts (0.7 mm fiber length sample) | 100% | 0 | 17.4 g |

It should be noted that for the first sample with 2.8 mm fiber length, the flotation basically did not efficiently work and the foreign content of the accepts indeed increased. The increase can be due to the contaminants measurement protocol, which has an error range of 10%. But it is clear from the result that the foreign content did not significantly change. Without being bond to this theory, the inventor believes that this is due to an accumulation of the long fibers (mostly cellulosic long fibers) at the bottom of the wet part of the froth, which creates a tight network of entangled fibers. Such a network reduces the passing through of floating foreign fibers in such a way that only very fine material can go through the voids of the long fiber network. Consequently, the flotation process is less efficient for the long-fiber pulp sample. The floatation only created a small amount of rejects and a large amount of this reject were cellulosic fibers.

In contrast thereto, the results for the sample with shorter fibers (0.7 mm average fiber length) shows that the flotation is very efficient in reducing the foreign content and resulted in an accepts fraction of 100% cellulosic fibers. Due to the shorter fibre length, the formation of a network of fibres on the bottom of the froth is prevented. As a result, foreign synthetic fibers can float more easily upward to the top of the froth. Subsequently, the skimmer can remove more foreign content and thus the efficiency of the flotation process is highly increased. The amount of cellulosic fibers in the rejects fraction was also high in this experimental setup, but this can be alleviated by implementing additional multiple flotation stages (or other purifying procedures) to increase the amount/yield of recovered cellulosic material.

### Example 2 - Analysis of different fabric compositions

Comparison tests of three different fabric compositions, wherein each composition is processed in three different ways, were carried out. Each fabric composition comprises a non-cellulosic fiber and cotton as natural fiber.

Each fabric compositions were dry fiberized or milled to the average fiber length of about 1.0 to 1.2 mm. Afterwards, the different compositions were a) not treated further, b) refined and c) refined and cooked. Light low consistency refining and alkaline cooking was used for the refining and/or cooking process.

The following table summarizes the respective compositions and the measured viscosity number of cotton, which was determined according to ISO 5351, for the corresponding composition:

| **Fabric composition** | **Processing** | **Viscosity number** |
|---|---|---|
| 96% cotton and 4% elastane | fiberized/milled | 1985 ml/g |
| 90% cotton and 10% nylon (PA 6.6) | fiberized/milled | 1981 ml/g |
| 70% cotton and 30% PET | fiberized/milled | 1879 ml/g |
| 96% cotton and 4% elastane | fiberized/milled and refined | 1828 ml/g |
| 90% cotton and 10% nylon (PA 6.6) | fiberized/milled and refined | 1958 ml/g |
| 70% cotton and 30% PET | fiberized/milled and refined | 1815 ml/g |
| 96% cotton and 4% elastane | fiberized/milled, cooked and refined | 1441 ml/g |
| 90% cotton and 10% nylon (PA 6.6) | fiberized/milled, cooked and refined | 1184 ml/g |
| 70% cotton and 30% PET | fiberized/milled, cooked and refined | 1144 ml/g |

Subsequently, a portion of the fabric compositions was subjected to a single flotation stage, wherein the removal efficiency was measured. The removal efficiency of the cooked and refined as well as just refined compositions was measured. For elastane and nylon, the removal efficiency was measured and based on nitrogen content, while for PET the PET content was measured. For the measurement of the PET content, after a complete methanolysis of polyester (PET) to dimethyl terephthalate (DMT), the content of DMT was analysed in a gas chromatography-mass spectrometry with a polar WAX column as the separation column.

The following table summarizes the measured values.

| **Fabric composition** | **Trials** | **Nitrogen Removal Efficiency** | **PET Removal Efficiency** |
|---|---|---|---|
| 96% cotton and 4% elastane (fiberized/milled and refined) | 17 | 88.2% | |
| 96% cotton and 4% elastane (fiberized/milled, cooked and refined) | 27 | 40.7% | |
| 90% cotton and 10% nylon (PA 6.6) (fiberized/milled and refined) | 29 | 56.9% | |
| 90% cotton and 10% nylon (PA 6.6) (fiberized/milled, cooked and refined) | 26 | 92.2% | |
| 70% cotton and 30% PET (fiberized/milled and refined) | 30 | | 65.5% |
| 70% cotton and 30% PET (fiberized/milled, cooked and refined) | 28 | | 69.5% |

For all pulp types, the removal efficiency of the non-cellulosic fibers was relatively high regardless of the viscosity of cotton. In contrast to WO 2020/127453 A1, high removal efficiencies is achieved for the various compositions even with high viscosity numbers of cotton, which are all well above 1100 ml/g. This indicates that the reduced fiber length increases the efficiency within the flotation process regardless of the non-cellulosic fiber type.

## Claims

1. Method for processing textile waste for recycling comprising the steps of:
a) providing textile waste, which comprises cellulosic fibers and non-cellulosic fibers and contaminants, as raw material,
b) at least one step of comminution of the raw material in at least one comminutor to produce a comminuted material,
c) submitting the comminuted material to flotation to remove non-cellulosic fibers and contaminants from cellulosic fibers, and
d) providing the purified cellulosic fibers to further processing steps,
wherein, within the comminution step or steps and before the flotation, an average fiber length of the cellulosic and non-cellulosic fibers is reduced to an average fiber length of 0.7 to 2 mm, preferably to an average fiber length of 0.9 to 1.2 mm.

2. Method according to claim 1, wherein at least one of the comminution step or steps is carried out under dry conditions.

3. Method according to claim 1 or 2, wherein at least one of the comminution step or steps is carried out under wet conditions.

4. Method according to any of the claims 1 to 3, wherein the comminution step or steps comprises shredding, fiberizing, milling, cutting, chopping, deflaking and/or refining.

5. Method according to any of the claims 1 to 4, wherein the recycled fabric is composed of 50 to 99.9% w/w cellulosic fibers and 0,1 to 50% w/w non-cellulosic fiber.

6. Method according to any of the claims 1 to 5, wherein the limiting viscosity number of the purified cellulosic fibers is above 950 ml/g, preferably above 1000 ml/g, more preferably above 1100 ml/g.

7. Method according to any of the claims 1 to 6, wherein a flotation device is used for the flotation process.

8. Method according to any of the claims 1 to 7, wherein the flotation process is carried out in water phase.

9. Method according to any of the claims 1 to 7, wherein at least one surfactant is added to the pulp before the flotation step.

10. Method according to any of the claims 1 to 9, wherein the temperature during the flotation process is between 20°C and 90°C, preferably 60°C.

11. Method according to any of the claims 1 to 10, wherein the flotation time during the flotation process is between 3 and 20 minutes.

12. Method according to any of the claims 1 to 11, wherein further processing steps can comprise shipment to other facility, cooking, hydrocycloning, drying and/or bleaching.
